Europäisches Patentamt

**European Patent Office**

Office européen des brevets

(19)

(11) Publication number: **0 117 354**
**A1**

(12) # EUROPEAN PATENT APPLICATION

(21) Application number: **83307461.0**

(22) Date of filing: **07.12.83**

(51) Int. Cl.³: **B 23 Q 1/00**

(30) Priority: **07.12.82 GB 8234819**

(43) Date of publication of application: **05.09.84**
**Bulletin 84/36**

(84) Designated Contracting States: **CH DE FR GB IT LI SE**

(71) Applicant: **Renishaw plc, Gloucester Street,**
**Wotton-Under-Edge Gloucestershire GL12 7DN (GB)**

(72) Inventor: **McMurtry, David Roberts, "Undercroft"**
**Tabernacle Pitch, Wotton-Under-Edge, Glos. (GB)**

(54) **Machine tool.**

(57) A lathe too has a tool carousel (401) to which is connected a plurality of tools (407) any one of which (407A) is movable by indexing of the carousel (401) into an operative position OP relative to a workpiece (406) held by a chuck (402). Each tool (407) includes a sensor (14) adapted to generate a signal (414) responsive to engagement between the operative tool (407A) and a surface of the workpiece (406). The signal (414) is transmitted by an opto-electronic coupling (413) from the operative tool (407A) to a slide (404) supporting the carousel (401). The signal (414) is transmitted by a cable (415) from the slide (404) to a computer (410) cooperating to determine the position, relative to datum (411), of the surface of the workpiece (406) engaged by the tool (407A).

*A*

## MACHINE TOOL

### Background of the Invention

This invention relates to a machine tool comprising a tool holder, a work holder, the tool holder and the work holder being movable one relative to the other for machining a workpiece secured to the work holder by means of a tool connected to the tool holder, measuring means for measuring said relative movement thereby to determine the position of the tool relative to a datum having a fixed position relative to the tool holder, sensing means connected to the tool and adapted to generate a signal responsive to the tool and the workpiece attaining a predetermined relative position, the signal being transmitted to a computer there to be related to the output of the measuring means to determine the position of a selected surface of the workpiece relative to said datum. In effect, the workpiece is measured by using the tool as a probe. Such a machine is described in United Kingdom Patent Application No.2,069,142 A.

It is an object of this invention to extend the above teaching to more complex machine tools.

0117354

-2-

### Summary of the Invention

A machine tool according to this invention is characterised in that said tool is one of a plurality of tools each movable between an inoperative position and an operative position relative to the work holder, and further characterised by a support provided adjacent said operative position and relative to which the respective tools are movable when moving between the inoperative and operative positions, and a contactless coupling means arranged between the operative tool and the support for the contactless transmission of said signal.

## Brief Description of Drawings

Preferred embodiments of the invention will now be
described with reference to the accompanying drawings
wherein:-

Fig. 1 is a sectional side elevation of a part of
a lathe being a first embodiment of the
invention .

Fig. 2 is a plan view of Fig.1.

Fig. 3 is a system diagram of an electrical system
used in the embodiment of Figs.1,2.

Fig. 4 is a sectional side elevation of a part of
a machining centre being a second embodiment
of the invention.

Fig. 5 is a section on the line V-V in Fig.4.

Fig. 6 is a system diagram of an electric system
used in the embodiment of Figs.4,5.

Fig. 7 is a diagrammatic plan view of a lathe including
details similar to those shown in Figs.1 to 3.

## Description of Preferred Embodiments

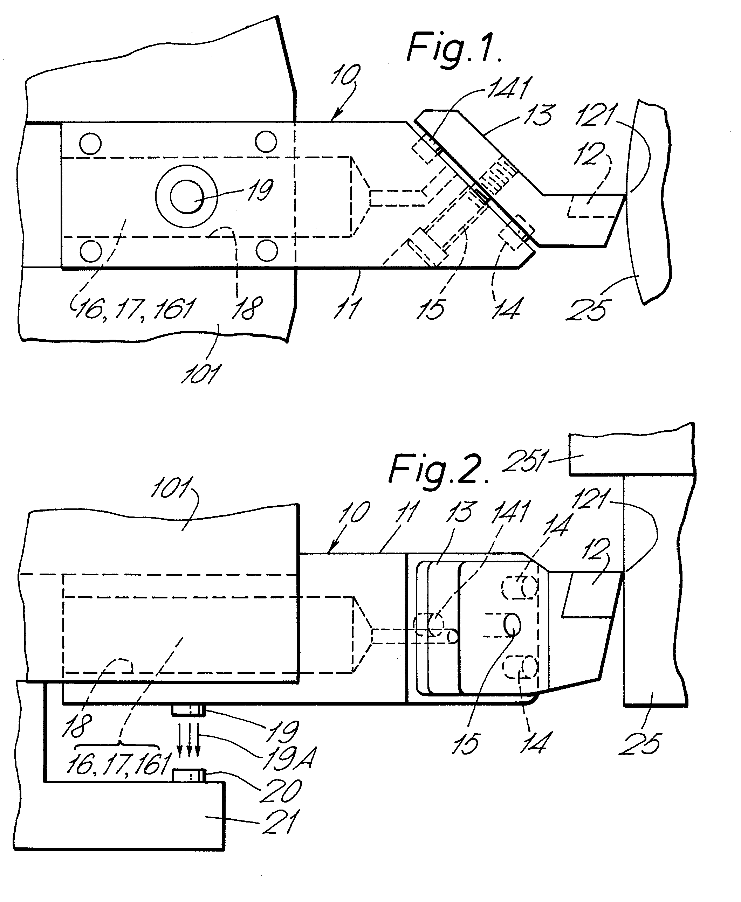

Referring to Figs.1 to 3, a cutting tool 10 has a
generally elongate body 11 at one end of which is
provided a cutting element 12 secured to a support
member 13.  The tool 10 is releasably secured to
a tool holder or carousel 101.  Two piezo-electric
sensing elements 14 are gripped in position between
the member 13 and the body 11 by a screw 15.  The
elements 14 are in the form of dowels which locate
the member 13 on the body 11.  A pad 141 is arranged
between the member 13 and the body 11 to provide,
together with the elements 14, a three-point support
for the member 13 on the body 11.  The elements 14
are each adapted to change state and produce an
electrical analogue signal 14A if a force acting on them is varied. The elements 14 are connected to respective amplifiers 16 powered by a battery 17. The amplifier outputs, 16A, are connected by an OR gate 161 in turn connected to a light-emitting diode 19 adapted to output a transmission signal or light beam 19A corresponding to the signal 14A. The amplifiers 16, battery 17 and OR gate 161 are housed in a recess 18 in the body 11. The diode 19 is provided on the body 11 in position to transmit the beam 19A to an optical receiver or photo diode 20 provided on a tool holder support or bearing housing 21. The tool 10 is one of an annular array of such tools provided on the carousel 101 and the latter is indexable relative to the bearing housing 21 to bring the tools selectively from an inoperative into an operative position relative to a work piece 25 supported by a work holder or chuck 251. The tool for the time being in the operative position is referred to as the "operative tool". Figs.1,2 only show the operative tool. The diodes 19 of the respective tools constitute, together with the diode 20, a contactless coupling system for the transmission of said change of state of the elements 14 from the operative tool 10 to the bearing housing 21. The electrical output of the receiver 20 is connected to a trigger circuit 23 which converts the analogue signal 19A into a pulse signal 23A when a given force on the cutting element 12 is exceeded. The housing 21 and chuck 25 are movable relative to one another in coordinate directions in the usual manner to bring the tool into engagement with the workpiece for effecting a cut or to withdraw the tool from the workpiece when the cut is completed. The signal 23A is produced when the tool 10 attains a predetermined position relative to the work piece, in this case, a position when a light pressure is exerted by the tool on the work piece. The signal 23A is connected to a counter 24 driven by an opto-electronic scale (not shown and well known per se) for determining the relative position of the tool 10 and the work piece 25 during the coordinate movement thereof. The signal 23A is arranged to transmit the instantaneous content of the counter 24 to a register 26 whose content is therefore a measure of the relative position of the tool and the work piece.

The machine described is used for measuring the dimensions of the work piece where engaged by the tool. A typical such measuring operation is preferably carried out by bringing the tool slowly into engagement with the work piece while the latter is not rotating. Then, given that the position of the cutting extremity, denoted 121, of the tool is known relative to a datum (as by a prior datuming operation), the content of the register at the instant of the signal 14A is a measure of the relevant dimensions of the work piece. The tool must, of course, be halted as nearly as possible instantaneously after such engagement with the work piece. Such halting can readily be effected by the usual control system for effecting said relative movement. However, the measuring operation may also be performed on initiation of a cut, i.e. when the tool is first engaged with the work piece while the latter is rotating, or the operation may be performed on completion of a cut when the tool is disengaged from the rotating work piece and the force on the tool falls to zero.

In the latter case an appropriate zero-sensing circuit (not shown) is provided. The signal 14A may also be used for measuring the operating load on the tool, e.g. with a view to preventing overload. In any case, it will be seen that since the sensing elements 14 are situated on the tool in close proximity with the cutting element 12, and since also the amplifier 16 is embodied in the tool, there is a strong yet sensitive response. At the same time, the provision of contactless transmission by means of the opto-electronic coupling 19,20 to the single receiver 20 provides a simple means for transmitting the signal from an array of tools, such as the tool 10, to stationary structure.

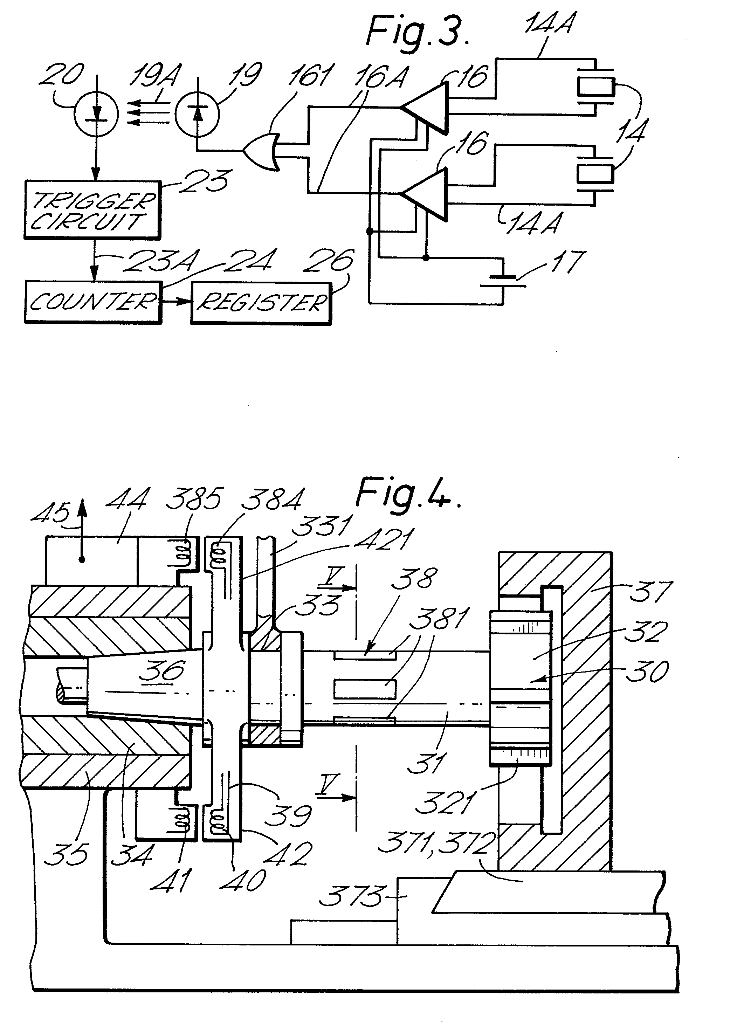

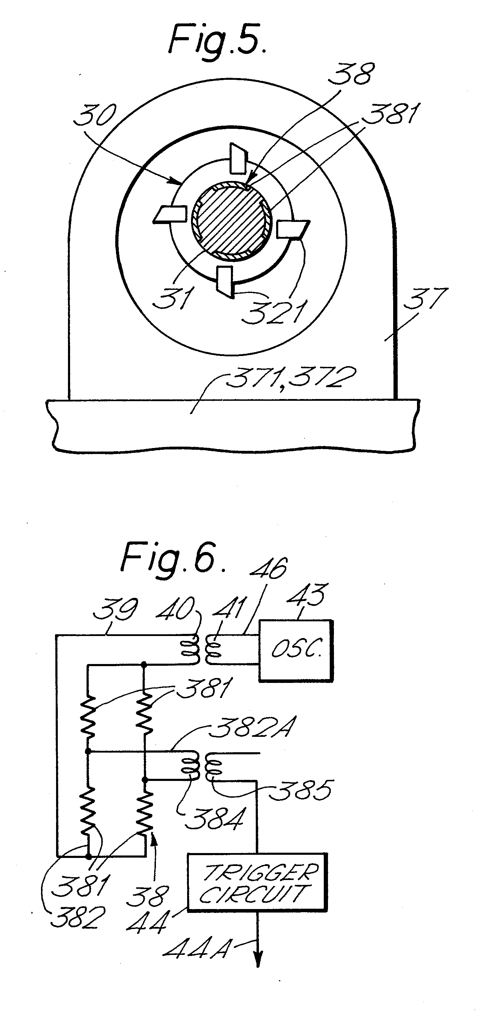

Referring to Figs.4 to 6, a rotary cutting tool 30 has a cylindrical body 31, provided at one end with a cutter 32 having an annular array of cutting elements 321. At its other end the body 31 has a grooved collar 33 for cooperation with an automatic tool change mechanism, indicated 331, whereby the tool can be inserted into or removed from a tool holder or drive spindle 34 supported for rotation in a tool holder support or head 35, the connection between the tool and the spindle being by means of a taper shank 36 provided at the other end of the body 31. A work piece 37 is supported on a work holder or table 371. The head 35 and the table 371 are movable one relative to the other by coordinate slides 372,373 to effect tool feed, and the spindle is rotatable relative to the head 35 for imparting cutting motion to the tool. The body 31 has provided thereon a sensing element or strain gauge 38 positioned to sense the bending strain on the body 31 due to to engagement between the elements 321 and the work piece. A passive circuit 39 connects the strain gauge 38 to a coil 40 embodied in the free end of a first arm 42 extending radially from the cylindrical body 31. The coil 40 is proximate to a coil 41 mounted on the head 35. The coils 40,41 define a first inductive coupling. The strain gauge 39 comprises four strain-responsive resistances 381 arranged symmetrically around the body 31 and connected in a bridge circuit 382 (Fig.6) having an output 382A to a coil 384 embodied in the free end of a second arm 421 extending radially from the body 31. The coil 384 is proximate to a coil 385 mounted on the head 35 and constitutes a second inductive coupling therewith. The circuit 39 is engaged by an oscillator 43 mounted on the head 35 and acting through the first coupling 40,41. The output of the bridge circuit 382 is transmitted via the second coupling 384,385 to a trigger circuit 44 adapted to produce a signal 44A responsive to the bridge output 382A exceeding a given magnitude. The signal 44A is used to transfer the instantaneous content of a counter to a register essentially the same as described with reference to the signal 23A of Fig.3. The coils 40, 384 of the respective tools and the coils 41,385 of the head 35 constitute a contactless coupling system for transmission, between the tool 30 and the head 35, of the energising signal 46 as well as of the change of state signal of the gauge 38 signified by the output 382A.

In operation, when it is desired to use the tool 30 for measuring the workpiece, the head 35 and the work piece 37 are moved one relative to the other to bring one of the cutting elements 32 into engagement with the work piece. Normally the spindle 34 would
not be rotated for the measuring operation. Different
elements 321 may be used for engagement with differently
orientated surfaces of the work piece. Thus, for
example, as indicated in Fig.5, when it is desired
to measure the diameter of a bore 47, diametrally
opposite elements 32 may be used for engagement with
diametrally opposite surfaces of the bore. A change
in bending strain due to said engagement is sensed
by the bridge circuit 382. It will be clear that
the couplings 40,41 and 384,385 are each a means
for contactless signal transmission between the tool
and the head.

The invention is not limited to the piezo-electric
elements 14 or strain gauge 38 described. Any force-
sensitive or strain-sensitive means may be provided
on the tool to respond to engagement between the
tool and the work piece. Further, instead of relying
on engagement with the work piece, the invention
may provide for the sensing at a distance, e.g. by
the break-down of a potential between the tool and
the work piece when the tool is a short distance
therefrom or by the use of an ultrasonic signal between
the tool and the work piece.

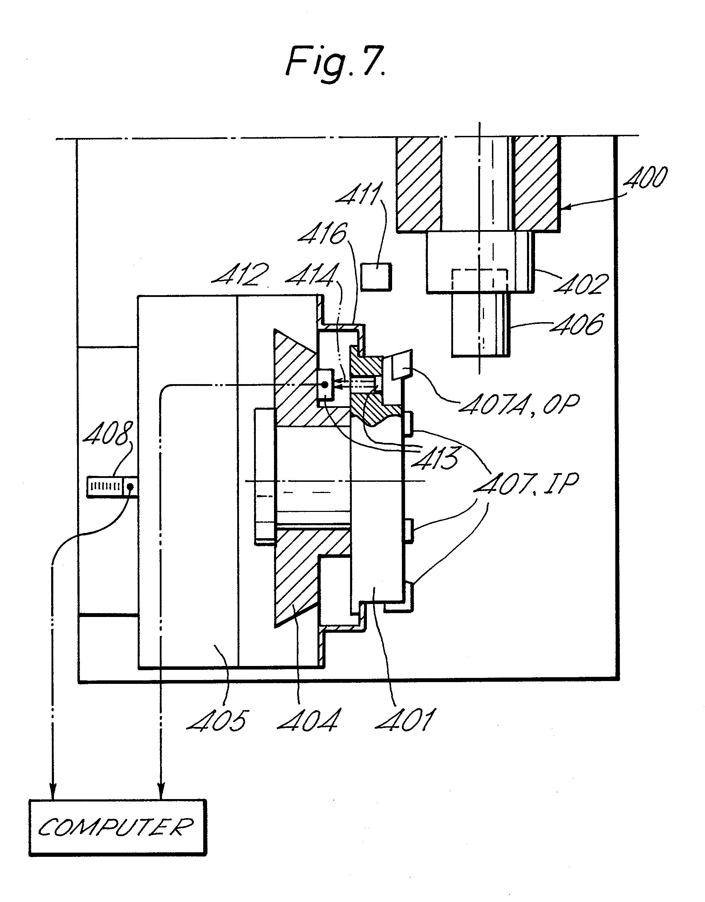

Referring to Fig.7, the lathe, denoted 400, has a
tool holder or carousel 401, a work holder or chuck
402, and slides 404,405 along which the carousel
401 is linearly movable for machining a workpiece
406, held in the chuck 402, by means of a tool 407A
connected to the carousel 401. The tool 407A is
one of a plurality of tools 407 connected to the
carousel around the periphery thereof. The linear movement of the carousel 401, more specifically the movement of the tool 407A, is measured by opto-electronic scales 408 (only one shown) having an output 409 to a computer 410. The measurement is made relative to a datum being a sensor 411 having a fixed position relative to the chuck 402. Before machining, each tool 407 is engaged with the sensor 411 to establish the datum position of the tool in a manner known per se. The carousel 401 is supported for rotational indexing on the slide 404 so that each tool 407 can be moved between an inoperative position IP and an operative position OP relative to the chuck 402, the operative position being that of the tool 407A which is accordingly referred to as the "operative tool". Adjacent the operative tool 407A there is provided a support 412 being, in this embodiment, a part of the slide 404. An opto-electronic coupling 413 is provided for transmission of a signal 414 between any one operative tool 407A and the support 412 substantially as described with reference to Figs.1 to 3. The signal 414 occurs responsive to engagement of the tool with the workpiece 406 and is transmitted by appropriate cable 415 to the computer 410 there to be related to the output 409 to determine the position of the surface of the workpiece 406 with which the tool 407A was engaged, the surface being selected by program control in a manner known per se. The coupling 413 is protected by a sealed cover 416.

CLAIMS

1. A machine tool comprising a tool holder (101;34;401), a work holder (251;371;402), the tool holder and the work holder being movable one relative to the other for machining a workpiece (25;37;406) secured to the work holder by means of a tool (13;30;407A) connected to the tool holder, measuring means (408) for measuring said relative movement thereby to determine the position of the tool relative to a datum (411) having a fixed position relative to the tool holder, sensing means (14;38) connected to the tool and adapted to generate a signal (19A;382A;414) responsive to the tool and the workpiece attaining a predetermined relative position, the signal being transmitted to a computer (410) there to be related to the output of the measuring means to determine the position of a selected surface of the workpiece relative to said datum, c h a r a c - t e r i s e d in that said tool (10;30;407A) is one of a plurality of tools each movable between an inoperative position and an operative position relative to the work holder (251;371;402) and further characterised by a support (21;35;412) provided adjacent said operative position and relative to which the respective tools (10;30;407) are movable when moving between the inoperative and operative positions, and a contactless coupling means (19,20;384,385;413) arranged between the operative tool (10;30;407A) and the support (21;35;412) for the contactless transmission of the said signal (19A;382A;414).

2. A machine tool according to claim 1 wherein said tool holder (101) and said support (21) are respectively a carousel (101) adapted to support said plurality of tools (10) and a bearing housing (21) supporting the carousel (101) for indexing motion to bring the tools (30) selectively into the operative position.

3. A machine tool according to claim 1 wherein said tool holder and tool holder support are respectively a drive spindle (34) and a head (35) supporting the drive spindle (34) for rotation, the spindle (34) being adapted to support any one of said plurality of tools (30) as introduced thereto by an automatic tool change mechanism (331).

4. A machine tool according to claim 1 wherein each said tool comprises a sensing element (14;38) adapted to change state responsive to said tool (10;30) attaining said predetermined relationship thereby to generate said signal (14A;382A).

5. A machine tool according to claim 1 or 2 or 3 wherein said tools (10) each include an amplifier (16) forthe output of the sensing element (14).

6. A machine tool according to claim 4 wherein said tools each include a power supply (17).

7. A machine tool according to claim 1 wherein said sensing element comprises at least one force-sensitive signal generator (14).

8. A machine tool according to claim 1 wherein said sensing element comprises at least one strain-responsive resistance element (38).

*Fig.1.*

10 141 13 121

19 12

16, 17, 161 18 11 15 14 25

101

*Fig.2.* 251

101 10 11 13 141 14 121 12

18 15 14 25

19
19A
20
21

16, 17, 161

2/4

0117354

Fig.3.

Fig.4.

## Fig.5.

## Fig.6.

0117354

# Fig.7.

COMPUTER

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-2 089 263 (BILZ) *Page 2, lines 66-116* | 1 | B 23 Q 1/00 |
| X | | 3,4,6 | |
| Y | GB-A-1 329 120 (VEB WERKZEUGMASCHINENKOMBINAT "7 OCTOBER") *Claims 1,2* | 1 | |
| X | | 2,8 | |
| D,X | GB-A-2 069 142 (McMURTRY) *Page 2, lines 99-108* | 5,7 | **TECHNICAL FIELDS SEARCHED (Int. Cl. 3)** |
| A | DE-A-2 627 946 (HOLIK) | 1 | B 23 Q |

The present search report has been drawn up for all claims

| Place of search THE HAGUE | Date of completion of the search 27-03-1984 | Examiner DE GUSSEM J.L. |
|---|---|---|